Europäisches Patentamt

European Patent Office

Office européen des brevets

(19)

(11) **EP 1 062 190 B1**

(12) **EUROPÄISCHE PATENTSCHRIFT**

(45) Veröffentlichungstag und Bekanntmachung des Hinweises auf die Patenterteilung:
**04.12.2002 Patentblatt 2002/49**

(21) Anmeldenummer: **99913104.8**

(22) Anmeldetag: **03.03.1999**

(51) Int Cl.⁷: $C07B\ 59/00$, $B01D\ 15/00$

(86) Internationale Anmeldenummer:
**PCT/DE99/00565**

(87) Internationale Veröffentlichungsnummer:
**WO 99/044970 (10.09.1999 Gazette 1999/36)**

(54) **VERFAHREN ZUR HERSTELLUNG VON [15 O]BUTANOL UND VORRICHTUNG ZUR DURCHFÜHRUNG DES VERFAHRENS**

METHOD FOR PRODUCING [15 O] BUTANOL AND DEVICE FOR IMPLEMENTING SAID METHOD

PROCEDE DE PREPARATION DE [15 O]BUTANOL ET DISPOSITIF PERMETTANT DE METTRE LEDIT PROCEDE EN OEUVRE

(84) Benannte Vertragsstaaten:
**AT BE CH CY DE DK ES FI FR GB GR IE IT LI LU MC NL PT SE**

(30) Priorität: **07.03.1998 DE 19809960**

(43) Veröffentlichungstag der Anmeldung:
**27.12.2000 Patentblatt 2000/52**

(73) Patentinhaber: **Forschungszentrum Jülich GmbH 52425 Jülich (DE)**

(72) Erfinder:
• **RODEN, Werner D-52391 Vettwei (DE)**
• **HAMKENS, Wilhelm D-96231 Staffelstein (DE)**

(74) Vertreter: **Gille Hrabal Struck Neidlein Prop Roos Patentanwälte, Brucknerstrasse 20 40593 Düsseldorf (DE)**

(56) Entgegenhaltungen:
**US-A- 5 082 980**

• **G. STÖCKLIN: "Radiopharmaceuticals for Positron Emission Tomography" 1993 , KLUWER , DORDRECHT XP002108580 in der Anmeldung erwähnt Seite 58 - Seite 61**
• **S. M. MOERLEIN: "Automated production of oxygen-15 labeled butanol for PET measurement of regional cerebral blood flow" APPLIED RADIATION AND ISOTOPES, Bd. 44, Nr. 9, September 1993 (1993-09), Seiten 1213-1218, XP000396539 EXETER GB**
• **M. S. BERRIDGE: "A routine, automated synthesis of oxygen-15-labeled butanol for positron tomography" JOURNAL OF NUCLEAR MEDICINE., Bd. 31, Nr. 10, Oktober 1990 (1990-10), Seiten 1727-1731, XP000150694 SOCIETY OF NUCLEAR MEDICINE. NEW YORK. 101969 1, US ISSN: 0161-5505**

**Beschreibung**

Die Erfindung betrifft ein Verfahren zur Herstellung von [$^{15}$O]Butanol. Die Erfindung betrifft ebenfalls eine Vorrichtung zur Durchführung des Verfahrens.

Bei der in der Nuklearmedizin eingesetzte Positron-Emissions-Tomographie (PET) werden Positronenstrahler verwendet, um Messungen am intakten Körper von Patienten vorzunehmen. Die bei der Rekombination der Positronen mit den Umgebungselektronen entstehende Gammastrahlung wird mittels Szintillationszählern gemessen. Die Meßanlage besteht aus einem senkrecht stehenden Ring, der sich aus vielen Szintillationszählern zusammensetzt, auf deren Achse sich der Patient auf einer Liege befindet.

Für die nuklearmedizinischen Messungen eignen sich im allgemeinen Radionuklide mit einer Halbwertzeit unter in etwa zwei Stunden, wie z.B. $^{18}$F mit einer Halbwertzeit von 110 min. Besonders günstig hat sich die Anwendung von Verbindungen mit $^{15}$O erwiesen. Dieses Radionuklid hat eine Halbwertzeit von 2 min und seine Anwendung kann nur dann in sinnvoller Weise durchgeführt werden, wenn die Herstellung des Radionuklids, bzw. die Herstellung einer dieses Nuklid enthaltenden Verbindung vor Ort in dem nuklearmedizinischen Institut durchgeführt wird.

Die am häufigsten verwendeten Verbindungen mit $^{15}$O sind [$^{15}$O]Wasser und [$^{15}$O]Butanol. Die Verwendung von [$^{15}$O]Butanol hat sich als vorteilhaft erwiesen, da diese Verbindung sich optimal fiir die Messung der regionalen Hirndurchblutung eignet. Die Diffusionseigenschaften der Verbindung gewährleisten betraubare Messungen über einem großen Bereich der regionalen Hirndurchblutung. Es hat sich herausgestellt, daß die Anwendung von [$^{15}$O]Butanol in Teilen des Gehirns mit einem starken Blutfluß zu besseren Meßwerten führt als die gleiche Anwendung von [$^{15}$O] Wasser. Es hat sich nämlich gezeigt, daß der Einsatz von [$^{15}$O]Wasser zu niedrige Werte ergibt.

Die Synthese von [$^{15}$O]Butanol ist in der Literatur bekannt. Sie wird in "Radiopharmaceuticals for Positron Emission Tomography", Stöcklin G. und Pike V.W. (Kluwer Academic Publishers P.O.Box 17 AA Dordrecht, The Netherlands, 1993), Seiten 58 - 61 beschrieben. Ausgehend von der Verbindung Tri-n-Butylboran (TBB) umfaßt sie die folgenden Schritte:

$$(1)\ B(n\text{-}Bu)_3 + [^{15}O]O_2 \rightarrow B(n\text{-}Bu)([^{15}O]\text{-}n\text{-}Bu)(O\text{-}n\text{-}Bu)$$

$$(2)\ B(n\text{-}Bu)([^{15}O]\text{-}n\text{-}Bu)(O\text{-}n\text{-}Bu) + 2\ H_2O \rightarrow n\text{-}Bu[^{15}O]H + n\text{-}BuOH + B(n\text{-}Bu)(OH)_2$$

Zur Herstellung von [$^{15}$O]O$_2$ wird in einem Zyklotron eine Sauerstoff/Stickstoff-Mischung mit einem Deuteronenstrahl behandelt, durch diese Bestrahlung wird in der Mischung [$^{15}$O]O$_2$ gebildet. Nach der Bestrahlung wird die Gas-Mischung mit TBB in Kontakt gebracht. Die Verbindung befindet sich dazu auf Aluminiumoxid als Trägermaterial, üblicherweise wird das Aluminiumoxid dazu vorher in eine Kartusche gebracht. Das Gas wird dabei durch die das Aluminiumoxid enthaltende Kartusche geführt.

Sofort nach Beendigung der Reaktion wird Wasser durch die Kartusche geleitet, wobei eine Hydrolyse gemäß Reaktionsschritt (2) ausgelöst wird. Die Reaktionsprodukte werden in wäßriger Lösung zu einer zweiten mit C-18 gefüllten Kartusche geführt. Das stark lipophile C-18 bindet das Butanol, die Salze werden nicht gebunden und werden mit der flüssigen Phase durch die Kartusche geführt. Somit wird eine vollständige Trennung von einerseits Butanol und andererseits den Borverbindungen durchgeführt. Als letzter Reaktionsschritt wird durch Spülen der C-18 Kartusche mit einer 5% Ethanol enthaltenden Kochsalzlösung das gebundene Butanol eluiert. Die isotone, [$^{15}$O]Butanol enthaltende Lösung ist hiernach fertig um in Untersuchungen an Patienten eingesetzt zu werden.

Die bislang verwendete Methodik zur Zubereitung der [$^{15}$O]Butanol - Lösung ist in der Veröffentlichung in "Radiopharmaceuticals for Positron Emission Tomography" beschrieben. Als erster Schritt in diesem Verfahren wurden die Aluminiumoxid-Kartuschen vorbereitet. Diese wurden manuell am Tag der Zubereitung mit TBB beladen. Dazu wurde die erforderliche Menge des Ausgangsprodukts aus einem Behältnis direkt auf die Kartusche gebracht, wobei in Anbetracht der extrem hohen Reaktivität der Verbindung gegenüber Sauerstoff mit großer Vorsicht vorzugehen war. Nach Vorbereitung des gesamten Tagesbedarfs an Kartuschen wurden sie in einem Exsikkator gelagert, bis sie benötigt wurden.

Das bekannte Verfahren sah vor, daß 8 Kartuschen in einer festen Aufstellung eingebaut wurden und in einer parallelen ebenfalls festen Aufstellung 8 C-18 Kartuschen. Die festen Aufstellungen besaßen eine maximale Aufnahmekapazität von jeweils 8 Kartuschen, da für die Steuerung der Reaktion ein Mehrwegventil verwendet werden mußte und die Kapazität der verfügbaren Ventile eine maximale Kapazität von 8 Einstellungen aufweisen. Über einem System von manuell oder automatisch bedienbaren Ventilen wurde eine erste Zubereitung in der Einstellung 1 für beide Aufstellungen Aluminiumoxid und C-18 durchgeführt. Nach der Elution mit der Kochsalz/Ethanol-Lösung wurde das Eluat über einem Sterilfilter in ein Vial gepumpt. Dieses Vial, das sich in der Aufstellung in einem Bleicontainer befand, wurde nach Befüllung sofort aus der Anlage entnommen und zu dem Ort der medizinischen Untersuchung, der sich üblicherweise in unmittelbarer Nähe des Zubereitungsraumes befand, transportiert. Hiernach wurde nach dem gleichen Verfahren eine zweite Charge in der Einstellung 2 zubereitet. Nach Herstellung von 8 Vials mußte eine Umrüstung der Anlage vorgenommen werden.

Das seither benutzte Verfahren war mit einer Reihe von Nachteilen behaftet, die zu einer erheblichen Beschränkung der Herstellungskapazität führten.

Generell war das eingesetzte Verfahren sehr aufwendig und zeitintensiv. Zur kompletten Zubereitung jedes einzelnen Vials war eine Zeitdauer von minimal 13 Minuten erforderlich, d.h. daß nach Abliefern des ersten Vials in das medizinische Untersuchungslabor mindestens 13 Minuten bis zur Ablieferung des zweiten Vials verging. Da bei den PET-Untersuchungen eine nachgeschaltete Injektion mehrerer Chargen vorgesehen ist (es ist nicht unüblich an einem Patienten bis zu 9 Injektionen vorzunehmen), führte dies zu einem trägen Ablauf der Untersuchungen, was insbesondere für den Patienten äußerst unerwünscht ist. Das System der manuellen Beladung der Aluminiumoxid-Kartuschen mit TBB und der Einbau der Aluminiumoxid- und C-18-Kartuschen in ihre jeweilige feste Aufstellung führte per Durchführung der Zubereitung von 8 Vials zu einem Zeitbedarf von in etwa 4 Stunden. Eine Erhöhung der Zahl der Kartuschen in der Aufstellung hätte dazu einen Ausgleich schaffen können, aber das System mit dem 8-Wegeventil bot diese Möglichkeit nicht.

Auch die erforderliche manuelle Umrüstung der Anlage nach jedem Syntheseablauf war von Nachteil. Die mit TBB beladene Aluminiumoxid-Kartuschen wurden grundsätzlich unter Schutzgas gelagert, aber der Einbau in die feste Anlage führte unvermeidlich zu einem gewissen Verlust des Ausgangsprodukts, da ein vollständiger Ausschluß von Sauerstoff nie ganz erreicht werden konnte.

Ein weiterer Nachteil des alten Verfahrens stellte die Tatsache dar, daß der gewünschte Schutz des ausführenden Personals nicht in dem gewollten Umfang eingehalten werden konnte. Bedingt durch eine Nebenreaktion entstehen im Zyklotron ebenfalls geringe Mengen $^{11}C$, die in unterschiedlicher chemischer Konstellation mitgeführt werden und letztendlich ebenfalls auf den Aluminiumoxid-Kartuschen gebunden werden. Da $^{11}C$ eine wesentlich längere Halbwertzeit als $^{15}O$ aufweist (20 min gegenüber 2 min), war bei der Umrüstung noch eine gewisse Strahlung bedingt durch die $^{11}C$ enthaltenden Produkte feststellbar.

Noch ein weiterer Nachteil in dem Gesamtablauf stellt die Abfüllung in ein Vial dar. Vor der Untersuchung mußte die Testlösung aus dem Vial in eine Spritze aufgezogen werden. Da diese Handlung bei stark strahlenden Produkten mit einer gewissen Umständlichkeit vorgenommen werden mußte, bedingte sie Zeitverlust, was bei dem kurzen Halbwertzeit von $^{15}O$ naturgemäß mit Aktivitätsverlust einherging. Schätzungen anhand des Ablaufs im medizinischen Labor führten zu einem vermuteten Aktivitätsverlust von in etwa 30 %. Natürlich war auch generell die Tatsache unerwünscht, daß durch das Umfüllen auf die Injektionsspritze das Personal einer weiteren Strahlenbenlastung ausgesetzt ist.

Der Erfindung lag die Aufgabe zugrunde, ein verbessertes Verfahren zur Herstellung von [$^{15}O$]Butanol zu entwickeln. Das neue Verfahren sollte insbesondere den Durchsatz steigern, damit im gleichen Zeitraum mehr [$^{15}O$] Butanol-Chargen hergestellt werden können und die einzelnen Chargen auch schneller nacheinander abgeliefert werden können. Ein weiteres Ziel ist, eine höhere Sicherheit für das Personal sowohl im Bereich der Herstellung wie im medizinischen Labor zu erzielen.

Diese Aufgabe wird durch ein Verfahren gelöst, wobei eine Säule, welche ein Adsorptionsmittel enthält, mit Tri-n-Butylboran beaufschlagt wird, durch diese Säule ein Gas geführt wird, welches [$^{15}O$]$O_2$ enthält, das Reaktionsprodukt hydrolysiert wird, das hierbei entstandene [$^{15}O$]Butanol gereinigt und die das gereinigte [$^{15}O$]Butanol enthaltende Lösung einem Behälter zugeführt wird, wobei eine Mehrzahl von das Adsorptionsmittel enthaltenden Säulen auf einem austauschbaren Element befestigt wird und die Beaufschlagung mit Tri-n-Butylboran an auf dem Element befestigten Säulen durchgeführt wird.

Das erfindungsgemäße Verfahren zur Herstellung von [$^{15}O$]Butanol umfaßt als erster Schritt die Befestigung von einer Mehrzahl von ein Adsorptionsmittel enthaltenden Säulen auf einem dazu geeigneten Element. Die Säulen werden somit vor diesem ersten Schritt in keinster Weise vorbehandelt. Als Element wird eine solches Element gewählt, das sich eignet, um schnell und mit wenig Aufwand in die Vorrichtung für die Herstellung eingebaut zu werden und gleichermaßen schnell und einfach wieder aus der Vorrichtung entfernt zu werden. Dieser einfache Ein- und Ausbau ermöglicht einen schnellen Austausch von einem Element mit verbrauchten Säulen für ein Element mit frischen Säulen. Erst nach dem Einbau des Elements mit der Mehrzahl von unbehandelten, das Adsorptionsmittel enthaltenden Säulen in die Vorrichtung wird eine Beaufschlagung des Adsorptionsmittels mit TBB vorgenommen sowie die Schritte durchgeführt, die zur Vorbereitung oder Nachbereitung der Säulen erforderlich sind. Durch die Beaufschlagung mit TBB sind die Säulen für die anschließende Reaktion mit [$^{15}O$]$O_2$ präpariert. Nachdem die Reaktion mit [$^{15}O$]$O_2$ auf der Säule erfolgt ist, wird das Herstellungsverfahren durch Zufuhr von Wasser fortgesetzt.

Im Rahmen der vorliegenden Erfindung kann demineralisiertes Wasser, destilliertes Wasser, doppelt destilliertes Wasser, eine Elektrolytlösung in demineralisiertem Wasser, destilliertem Wasser oder doppelt destilliertem Wasser, eine Pufferlösung oder ähnliche wäßrige Lösungen verwendet werden. Wo in der Beschreibung von Wasser gesprochen wird, kommt somit als Alternativ auch eine andere wäßrige Lösung in Betracht.

In Anwesenheit vom Wasser wird das Reaktionsprodukt hydrolysiert werden und werden die Hydrolyseprodukte mit der wäßrigen Phase von der Säule heruntergespült. Die wäßrige Lösung enthält mit [$^{15}$O] markierter Butanol sowie nicht markiertes Butanol und borhaltige Restprodukte. In einem nächsten Reinigungsschritt wird Butanol von den borhaltigen Produkten getrennt. Das markierte Butanol wird einem Behälter zugeführt und ist sofort für die Anwendung im nuklearmedidinischen Institut verfügbar.

Bereits durch den ersten Schritt unterscheidet sich das erfindungsgemäße Verfahren wesentlich von dem Verfahren, das in "Radiopharmaceuticals for Positron Emission Tomography", Stöcklin G. und Pike V.W. beschrieben wurde. In dem erfindungsgemäßen Verfahren werden die Säulen mit Adsorptionsmittel auf einem austauschbaren Element der Vorrichtung zur Durchführung des Verfahrens befestigt. Dieses Element kann im Prinzip jede Gestaltung haben, die Befestigung der Säulen kann auch beliebig durchgeführt werden. Es ist lediglich erforderlich, eine solche Befestigung an dem Element vorzusehen, daß das Element mit den befestigten Säulen auf einfacher Weise in die erfindungsgemäße Vorrichtung ein- und ausgebaut werden kann. Durch diese Ausgestaltung gemäß der Erfindung wird eine entscheidende Vereinfachung des Verfahrens erreicht. Statt einer manuellen Vorbereitung der einzelnen Säulen kann die gesamte Vorbereitung der Säulen in situ in der Vorrichtung durchgeführt werden. Dazu soll beachtet werden, daß die Vorbereitung der Säulen mit Aufwand verbunden ist. Erstens muß das Adsorptionsmaterial mit irgendeiner Flüssigkeit befeuchtet werden vor der Beaufschlagung mit TBB. Des weiteren muß die Reaktion sowie die Vorbereitung dazu wegen der extremen Reaktivität von TBB unter einem Schutzgas durchgeführt werden. Eine Behandlung kann dann folgendermaßen ablaufen, daß zunächst ein Schutzgas durch die unbehandelte Säule geführt wird, daraufhin eine bestimmte Menge Wasser auf die Säule gebracht wird, anschließend eine weitere Behandlung mit Schutzgas vorgenommen wird, dann die Beaufschlagung mit TBB erfolgt und die Vorbereitung mit einer weiteren Behandlung mit Schutzgas abgeschlossen wird. Erst durch diese gesamte Vorbereitung ist die Säule fiir die Reaktion mit markiertem Sauerstoff gerüstet. Gemäß dem Verfahren nach dem Stand der Technik wurden diese vorbereitenden Schritte manuell durchgeführt und wurde die Säule erst nach vollständiger Durchführung sämtlicher vorbereitender Schritte in die Vorrichtung eingebaut oder alternativ zunächst in einem Exsikkator unter Schutzgas aufbewahrt, um erst zu einem späteren Zeitpunkt eingebaut zu werden.

Als Schutzgas kann im Rahmen des erfindungsgemäßen Verfahrens jedes bekannte Schutzgas verwendet werden. Besonders bewährt haben sich die Edelgase Helium und Argon.

Im Rahmen des erfindungsgemäßen Verfahrens sind die Säulen mit einem Adsorptionsmittel gefüllt. Dieses Adsorptionsmittel muß geeignet sein das TBB und das Reaktionsprodukt, welches beim vorstehend beschriebenen Reaktionsschritt (1) entsteht zu adsorbieren. Es eignen sich hierfür Adsorptionsmittel wie z.B. $TiO_2$, $SiO_2$ und $Al_2O_3$. Besonders geeignet im Rahmen der vorliegenden Erfindung ist die Anwendung von Aluminiumoxid ($Al_2O_3$) als Adsorptionsmittel. Sehr bewährt hat sich die Anwendung von den käuflich erwerblichen Sep-Pak Alumina Plus Kartuschen (Waters). Diese vorgefertigten Kartuschen enthalten 1710 mg Aluminiumoxid und eignen sich im Rahmen des erfindungsgemäßen Verfahrens insbesondere für die rasche Befestigung an dem austauschbaren Element.

Die Vorbereitung der Säulen wird nach einem festen Schema durchgeführt, dadurch ist das erfindungsgemäße Verfahren sehr geeignet, vollautomatisch durchgeführt zu werden. Es stellt ein weiterer Aspekt des erfindungsgemäßen Verfahrens dar, daß sämtliche Schritte von einem Rechner gesteuert vollautomatisch ablaufen. Über dem Rechner werden Ventile und Motorspritzen nach an sich bekannten Methoden gesteuert.

Die Wassermenge, die im ersten Schritt auf die Säule gebracht, ist gering. Es hat sich im Rahmen der Untersuchungen herausgestellt, daß hierfür eine Menge von 0,1 ml ausreicht.

Die Menge TBB, mit welcher die Säule beaufschlagt wird, kann zwischen 50 ul und 250 ul variieren, in den bislang durchgeführten Untersuchungen hat sich eine Menge von 80 ul als ausreichend erwiesen.

Nachdem die Vorbereitung der Säule abgeschlossen ist, kann der markierte Sauerstoff zugeführt werden. Zur Herstellung des Radionuklids kommt ein Verfahren wie beschrieben in dem bereits zitierten Aufsatz in "Radiopharmaceuticals for Positron Emission Tomography" in Betracht. Bei einem solchen Verfahren wird eine Sauerstoff/Stickstoff-Mischung in einem Zyklotron mit Deuteronen beschossen. Nach dieser Behandlung wird die Gasmischung, welche nunmehr einen bestimmten Anteil des Radionuklids [$^{15}$O] in der Form von [$^{15}$O]$O_2$ aufweist, der Säule zugeführt. Die Dauer des Gaszufuhrs wird letztlich bedingt durch die Konzentration des Radionuklids im Gas und kann zwischen 30 sek und 3 min variieren, üblicherweise wird eine Behandlungsdauer von 30 bis 60 sek, vorzugsweise von 40 sek gewählt.

Nachdem der Gaszufuhr beendet worden ist, wird sofort anschließend eine bestimmte Menge Wasser zugeführt. Diese Menge muß ausreichend sein, um eine vollständige Hydrolyse des beim Reaktionsschritt (1) entstandenen Produktes zu bewirken und die Hydrolyseprodukte, insbesondere Butanol, von der Säule zu eluieren. Die Wassermenge kann zwischen 1,5 und 5 ml gewählt werden, vorzugsweise wird eine Wassermenge von 3 ml genommen. Hierdurch wird erstens eine Hydrolyse des Reaktionsproduktes gemäß dem vorstehend beschriebenen Reaktionsschritt (2) erzielt und werden die Hydrolyseprodukte insgesamt von der Säule mit Adsorptionsmittel heruntergespült. Das Wasser enthält n-Butanol, n-[$^{15}$O]Butanol und Borverbindungen. Für die Injektion am Patienten ist es erforderlich, eine Reinigung dieser Mischung vorzunehmen, damit eine Lösung injiziert wird, welche möglichst lediglich das Testprodukt

n-[$^{15}$O]Butanol aufweist (daß die Testlösung auch unmarkiertes Butanol enthält, ist dabei unschädlich).

Für die Reinigung der Mischung kommen die üblichen Verfahren in Betracht. Besonders bewährt hat sich im Rahmen des erfindungsgemäßen Verfahrens eine Reinigung auf C-18. Dieses Material eignet sich besonders gut für eine Auftrennung von Produkten mit unterschiedlicher Lipophilie. Aus der wäßrigen Mischung wird Butanol (markiertes und unmarkiertes) adsorbiert, während die hydrophileren borhaltigen Reaktionsprodukte in der wäßrigen Phase bleiben. Nach Trennung von Adsorptionsmittel und wäßriger Phase erhält man somit ein feste Phase, welche adsorbiert das gewünschte n-[$^{15}$O]Butanol enthält.

Es wird im Verfahren besonders bevorzugt, C-18 ebenfalls in Säulen abgefüllt zu verwenden. Wie nachher bei der Beschreibung der erfindungsgemäßen Vorrichtung deutlich gemacht werden wird, sieht eine besonders bevorzugte Ausführungsform dieser Vorrichtung vor, daß sowohl das TBB bindende Adsorptionsmittel wie das für die Reinigung vorgesehene Adsorptionsmittel in einer praktisch vergleichbaren Ausführung der Säule im Verfahren verwendet wird. Es ist offensichtlich, daß eine Ausführung als Säule im Rahmen einer Reinigung aus einer Lösung vorteilhaft ist. Besonders bewährt hat sich die Anwendung von käuflich erwerblichen C-18 Kartuschen wie die Sep-Pak C 18 Plus Kartuschen (Waters). Vorteilhaft ist, daß diese Sep-Pak C 18 Plus Kartuschen vergleichbare Abmessungen haben wie die Sep-Pak Alumina N Plus Kartuschen. Dies gewährleistet eine einfache und leicht praktikabele Anwendung in der erfindungsgemäßen Vorrichtung, wie es später noch beschrieben wird.

Es ist erforderlich, die C-18-Kartuschen mit Ethanol vorzubehandeln, sie anschließend mit Wasser zu spülen und mit Schutzgas sauerstofffrei zu machen.

Die Verwendung von vorgefertigten C-18 Kartuschen wurde auch bereits im Verfahren gemäß dem Stand der Technik vorgenommen. Auch im Hinblick auf die Anwendung der Kartuschen mit C-18 stellt es eine erhebliche Vereinfachung des Verfahrens dar, wenn diese Kartuschen mit C-18 auf einem austauschbaren Element der Vorrichtung befestigt werden. Wie bei der Beschreibung des Verfahrens gemäß dem Stand der Technik bereits dargestellt wurde, sah das bekannte Verfahren vor, auch die Kartuschen mit C-18 in einer festen Aufstellung der Vorrichtung zu befestigen. Die C-18-Kartuschen besitzen zwar nicht die Empfindlichkeit wie die Aluminiumoxid-Kartuschen, aber ihr Einbau war trotzdem aufwendig und mit Zeitaufwand verbunden. Am Ende des Herstelldurchgangs mußten die verbrauchten Kartuschen manuell aus der Vorrichtung entfernt werden, was nochmals mit Aufwand verbunden war und außerdem eine Gefahrenquelle für das Personal darstellte. Dadurch daß sich die Kartuschen mit C-18 auf einem austauschbaren Element der Vorrichtung befinden, ist es einfach möglich, nach Beendigung des Herstellvorgangs das ganze Element aus der Vorrichtung zu entfernen und bei Bedarf sofort ein weiteres Element mit frischen Kartuschen in die Vorrichtung einzubauen. Das ausgebaute Element mit verbrauchten Kartuschen kann solange zur Seite gestellt werden. Irgendwann ist Zeit und Gelegenheit, die verbrauchten Kartuschen von dem Element abzunehmen und sie zu entsorgen. Auf jedem Fall kann diese Handlung bis zu einem Zeitpunkt verschoben werden, wo die Reststrahlung auf Null reduziert ist.

Es ist möglich, die Säulen mit C-18 auf einem zweiten austauschbaren Element zu befestigen, d.h. für das erfindungsgemäße Verfahren zwei unterschiedliche austauschbare Elemente vorzusehen, ein erstes für die Säulen mit Aluminiumoxid und ein zweites für die Säulen mit C-18. Eine solche Ausführung des erfindungsgemäßen Verfahrens bietet ebenfalls sämtliche Vorteile, welche die Verwendung des austauschbaren Elements für die Säulen mit Aluminiumoxid alleine bietet. Es ist jedoch eine weitere, besonders bevorzugte Ausführungsform des erfindungsgemäßen Verfahrens, ein Element vorzusehen, daß beide Typen von Säulen aufnimmt. In dieser Ausführungsform werden somit die Säulen mit Aluminiumoxid und die Säulen mit C-18 auf dem gleichen Element befestigt und wird nur dieses eine Element in die Vorrichtung eingebaut und nach Beendigung des Herstellvorganges wieder ausgebaut. Dies stellt eine weitere Vereinfachung des Verfahrens dar.

Nach der Reinigung der Mischung wird n-[$^{15}$O]Butanol in Lösung einem Behälter zugeführt. Vorstehend wurde beschrieben, daß die Anwendung von C-18 als Adsorptionsmittel sich bei der Reinigung besonders bewährt hat. Zur Ablösung von n-[$^{15}$O]Butanol von dem Adsorptionsmittel ist es erforderlich eine Lösung anzuwenden die weniger hydrophile Eigenschaften aufweist als Wasser. Es hat sich herausgestellt, daß eine Ethanol/Wasser-Mischung besonders geeignet ist. Es hat sich als vorteilhaft herausgestellt, eine 5 %-ige Lösung von Ethanol in Wasser, mehr bevorzugt eine 5 %-ige Lösung von Ethanol in 0,9 %iger Kochsalzlösung zu verwenden, da erstens eine solche Mischung ausreicht, um n-[$^{15}$O]Butanol von C-18 abzulösen und zweitens eine solche Lösung geeignet ist, am Menschen intravenös injiziert zu werden und somit eine weitere Vorbereitung oder Anpassung der Lösung vor der Messung im nukleanmedizinischen Labor nicht erforderlich ist. Wenn gemäß der bevorzugten Ausführungsform die Anwendung von C-18 in Säulen vorgenommen wird, wird die 5 %-ige Ethanol/Wasser-Mischung durch die Säule geführt, wobei das adsorbierte n-[$^{15}$O]Butanol sich von dem Adsorptionsmittel ablöst und in der flüssigen Phase mitgeführt wird. Es ist offensichtlich, daß auch andere Lösungen zur Durchführung der Elution in Betracht kommen, diese Lösungen müssen die Bedingung erfüllen, daß sie die geeigneten Eigenschaften als Elutionsmittel aufweisen und zur intravenösen Injektion am Menschen die erforderliche Verträglichkeit aufweisen. Die Menge die zur Elution gebraucht werden muß befindet sich zwischen 2 und 10 ml der Lösung, üblicherweise wird im Verfahren ein Volumen von 5 ml verwendet.

Die erzielte Lösung ist sofort geeignet für die Anwendung am Menschen. Sie wird einem Behälter zugeführt und in diesem Behälter zu der Räumlichkeit transportiert, wo die nuklearmedizinische Messung vorgenommen wird.

Als Behälter kommt ein Vial in Betracht. Hierzu wird die Lösung über einer Kanüle durch den Gummistopfen in das Vial gebracht. Das Vial kann anschließend in einem Mantel aus Blei transportiert werden. Es können auch andere Bebälter benutzt werden.

Es ist ein weiterer Aspekt der vorliegenden Erfindung, die Abfüllung direkt in eine Injektionsspritze vorzunehmen. Durch diese Abfüllung entfällt im nuklearmedizinischen Labor die Handlung, die Lösung aus dem Vial in eine Injektionsspritze aufzuziehen. Es wurde bereits im Rahmen der Beschreibung des Standes der Technik dargestellt, daß diese Handlung nachteilig ist, da sie zum Zeitverlust, dadurch zum Aktivitätsverlust und somit insgesamt zu schlechteren experimentellen Bedingungen führt. Durch diese Maßnahme im erfindungsgemäßen Verfahren ist es somit möglich, gleiche Endprodukte ausgehend von einer geringeren Radioaktivität im ersten Reaktionsschritt zu erzielen. Diese Verringerung der Ausgangsradioaktivität führt zu einer Verminderung der Sicherheitsgefahren für das bedienende Personal. Außerdem stellt diese Art der Abfüllung eine Vereinfachung des Gesamtverfahrens dar, welche auch die Gefahr einer Kontaminierung des Personals mit radioaktivem Material vermindert.

Sämtliche Schritte des erfindungsgemäßen Verfahrens sind bei jeder einzelnen Herstellung identisch und laufen jedes Mal nach einem exakt gleichen Vorgang ab. Diese Eigenschaft macht das erfindungsgemäße Verfahren natürlich sehr für eine weitgehende Automatisierung geeignet. Zu diesem Zweck wurden Computerprogramme entwickelt, welche es ermöglichen, die Herstellung ohne direkte menschliche Eingriffe ablaufen zu lassen. Die Steuerung der Geräte sind nach an sich bekannten Methoden vorgenommen. Die vollständige Automatisierung vermindert die Gefahr, daß der Gesamtablauf durch Bedienungsfehler gestört wird.

Die Erfindung umfaßt weiter eine Vorrichtung, welche die Durchführung des vorstehend beschriebenen erfindungsgemäßen Verfahrens möglich macht.

Die erfindungsgemäße Vorrichtung zur Herstellung von [$^{15}$O]Butanol umfaßt ein austauschbares, bewegbares Element zur Aufnahme von einer Mehrzahl von mit Adsorptionsmittel gefüllten Säulen, einen Zufuhr von Schutzgas, einen Behälter mit Wasser, einen Behälter mit Tri-n-Butylboran, eine Anordnung zur Reinigung des entstandenen [$^{15}$O]Butanols und einen Behälter zur Aufnahme des gereinigten [$^{15}$O]Butanols.

Mittetpunkt der erfindungsgemäßen Vorrichtung ist das austauschbare und bewegbare Element, welches die Funktion hat, Säulen mit Adsorptionsmittel auf zu nehmen. Auf diesen Säulen findet die Reaktion von Tri-n-Butylboran mit dem Radionuklid [$^{15}$O]O$_2$ statt, wie es vorstehend bei der Beschreibung des erfindungsgemäßen Verfahrens erläutert wurde (Reaktionsschritt 1). Das Element hat einen Aufbau, welcher es möglich macht, es in die Gesamtvorrichtung ein- und auszubauen, wobei die Bedeutung dieses Merkmals darin zu sehen ist, daß das Element bei seinem Einbau die Säulen mit Adsorptionsmittel bereits enthält. Am Ende der Herstellung, nach Benutzung sämtlicher auf dem Element verfügbarer Säulen, wird das Element aus der Vorrichtung ausgebaut. Die Zusammenführung des Elements mit den das Adsorptionsmittel enthaltenden Säulen findet somit außerhalb der Vorrichtung statt, genau wie die Entfernung der verbrauchten Säulen aus dem Element nach Beendigung der Herstellung. Durch dieses Merkmal der erfindungsgemäßen Vorrichtung ist gewährleistet, daß die manuelle Vorbereitung mit wenig Aufwand verbunden ist, da das Element Säulen aufnimmt, die in keiner Weise vorbehandelt sind und somit ohne besondere Maßnahmen angefaßt und befestigt werden können. Auch macht es die erfindungsgemäße Vorrichtung möglich, bei Herstellung einer größeren Zahl von Chargen ein Element mit verbrauchten Säulen für ein Element mit frischen Säulen umzutahen, so daß die Herstellung des [$^{15}$O]Butanols ohne Verzögerung fortgesetzt werden kann, was für die anschließende klinische Untersuchung ein großer Vorteil darstellt, da es für das Personal im nuklearmedizinischen Labor und natürlich auch für den Patienten unerwünscht und unangenehm ist, während der Untersuchung längere Wartezeiten bedingt durch Umstellungen im Herstellungsbereich in Kauf nehmen zu müssen.

Das Element hat eine solche Ausgestaltung, daß es eine Mehrzahl von Adsorptionsmittel enthaltenden Säulen enthalten kann. Die Zahl der Säulen kann dabei variieren zwischen 8 und 100 Stück, bevorzugt wird eine Zahl zwischen 15 und 25 Stück. Diese Zahl stellt eine entscheidende Erweiterung der Kapazität der Vorrichtung dar. Die in dem bereits zitierten Aufsatz in "Radiopharmaceuticals for Positron Emission Tomography" beschriebene Vorrichtung nach dem Stand der Technik umfaßte 8 Säulen. Die damalige Führung der Reaktionsprodukte über 8/1 Wegeventile erlaubte lediglich einen Einbau von 8 Säulen. Wegeventile mit einer größeren Kapazität sind nicht verfügbar, so daß hiermit auch die maximale Kapazität in der früheren Vorrichtung erreicht war. In den bislang durchgeführten Versuchen hat sich herausgestellt, daß ein Element mit einer Kapazität zur Aufnahme von 20 einzelnen Säulen einen zufriedenstellenden Verfahrensablauf garantiert. Eine Vergrößerung der Kapazität läßt sich zwar realisieren, aber da die erfindungsgemäße Vorrichtung ein einfacher Austausch der Elemente ermöglicht, liegt dazu keine Notwendigkeit vor.

Die Säule mit Adsorptionsmittel muß am Anfang des Herstellungsvorgangs auf Zufuhr- und Abfuhrleitungen angeschlossen werden. Sobald die Verbindung mit diesen Leitungen hergestellt ist, kann die Vorbereitung des Herstellungsprozesses einen Anfang nehmen, wobei zur Beschreibung dieses Prozesses auf die Erläuterungen bei der vorstehenden Beschreibung des erfindungsgemäßen Verfahrens verwiesen wird. Nachdem als letzter Schritt das entstandene [$^{15}$O]Butanol mit Wasser von der Säule heruntergespült ist, kann die Verbindung der Leitungen mit der Säule verbrochen werden und kann für den nächsten Herstellungsvorgang eine Verbindung der Leitungen mit der nächsten Säule hergestellt werden.

Dieser Wechsel zwischen den einzelnen Säulen kann technisch auf unterschiedlicher Weise erzielt werden. So kann man eine solche Ausführungsform konzipieren, daß das Element zur Aufnahme der ein Adsorptionsmittel enthaltenden Säulen eine feste Position in der Vorrichtung einnimmt und der Wechsel dadurch vorgenommen wird, daß eine Anordnung welche die Zufuhr- und Abfuhrleitungen enthält, über das Element fährt und nach jedem einzelnen Herstellungsvorgang die Leitungen zur nächsten Säule führt. Im Rahmen der erfindungsgemäßen Vorrichtung wird jedoch ein System bevorzugt, wobei die Position der Leitungen sich nicht verändert und statt dessen ein Element vorgesehen ist, das insgesamt bewegbar angeordnet ist. Nach jedem einzelnen Vorgang wird die Verbindung der verbrauchten Säule mit den Leitungen verbrochen, durch Bewegung des Elements eine frische Säule von einer Warteposition in die Arbeitsposition gebracht, wird die Verbindung der frischen Säule mit Zu- und Abfuhrleitung hergestellt und die Vorbereitung der frischen Säule für den Herstellungsvorgang je nach Bedarf sofort oder mit gewisser Verzögerung eingeleitet.

Es hat sich im Rahmen der Erfindung als besonders vorteilhaft herausgestellt, das Element zur Aufnahme der ein Adsorptionsmittel enthaltenden Säulen tellerförmig auszubilden, wobei diese tellerförmigen Elemente bevorzugt um ihre zentrale Achse bewegbar sind. Diese Variante macht eine Ausführung des Elements möglich, wobei die Säulen auf dem Element kreisförmig angeordnet werden. Eine solche Anordnung erlaubt eine einfache Handhabung, da für den Transport des Elements aus der Warteposition der ersten Säule eine geringfügige Drehung um die zentrale Achse ausreicht und zwar so weit bis die frische Säule die Arbeitsposition erreicht hat.

Die erfindungsgemäße Vorrichtung weist einen Anschluß für den Zufuhr des Gasstrohms aus dem Zyklotron auf. Mindestens ein weiterer Anschluß führt zu einem Behälter mit Schutzgas.

Ein erster Behälter in der erfindungsgemäßen Vorrichtung enthält TBB. Diesem Behälter ist eine Spritze zugeordnet, welche aus diesem Behälter befüllt wird und exakt dosiert die erforderliche Menge TBB abgibt. Im Rahmen der Automatisierung der Vorrichtung wird die Spritze mit einem Motor angetrieben und wird ihre Funktion mittels eines Klenrechners gesteuert.

Ein weiterer Behälter enthält Wasser. Bei der Beschreibung des erfindungsgemäßen Verfahrens wurde bereits erläutert, daß bei der Vorbereitung der Säulen eine geringe Menge Wasser zugeführt wird und nach Beendigung der Reaktion von TBB mit dem Sauerstoff das erhaltene Reaktionsprodukt wiederum nach Zufuhr von Wasser hydrolysiert und von der Säule heruntergespült wird. Auch dem Behälter mit Wasser ist eine Spritze zugeordnet, welche aus dem Behälter befüllt wird und welche zum geeigneten Zeitpunkt die erforderliche Menge Wasser abgibt. Wie bereits im Rahmen der Beschreibung des erfindungsgemäßen Verfahren erläutert wurde, ist das Wasservolumen bei den beiden Schritten stark unterschiedlich. Aus diesem Grund ist es günstiger, die Vorrichtung statt mit einer Spritze mit zwei unterschiedlichen Spritzen auszustatten, wobei eine der beiden Spritzen zur Injektion des kleineren Volumens geeignet ist, die zweite zur Injektion des größeren Volumens. Beide Spritzen können dem gleichen Behälter mit Wasser zugeordnet sein, es ist ebenfalls möglich, zwei getrennte Behälter mit Wasser in der Vorrichtung aufzunehmen, wobei dann jede Spritze einem eigenen Behälter zugeordnet wird. Genauso wie die Spritze für TBB ist es im Rahmen der Automatisierung der Vorrichtung günstig, die Spritzen mit einem Motor anzutreiben und die Steuerung mit einem Kleinrechner vorzunehmen.

Eine Anordnung in der erfindungsgemäßen Vorrichtung sieht eine Reinigung der hydrolysierten Mischung vor. Eine solche Reinigung kann mit jeder beliebigen Anordnung, welche sich für eine solche Mischung von Hydrolyseprodukten eignet, vorgenommen werden. Wie bei der Beschreibung des erfindungsgemäßen Verfahrens bereits dargestellt wurde, hat sich die Verwendung von Säulen mit C-18 als vorteilhaft dargestellt. Diese Verwendung von C-18 Säulen als bevorzugte Ausführungsform des erfindungsgemäßen Verfahrens läßt sich auch in besonders einfacher und vorteilhafter Weise mit dem austauschbaren und bewegbaren Element kombinieren. Grundsätzlich kommt in Betracht, für die Säulen mit C-18 ein separates austauschbares Element zur Aufnahme der Säulen mit C-18 vorzusehen, wobei Führung und Fortbewegung dieses zweiten Elements völlig parallel zu dem ersten Element mit den das Adsorptionsmittel enthaltenden Säulen durchgeführt werden sollte. Besonders vorteilhaft ist jedoch eine Ausführungsform, wobei die Säulen mit dem Adsorptionsmittel sowie die Säulen mit dem C-18 auf dem gleichen Element angeordnet werden. Bei einer solchen Anordnung kommt eine paarweise Anordnung der beiden Typen von Säulen in Betracht. Dabei können im einzelnen unterschiedliche Konstruktionen verwendet werden. Wenn in bevorzugter Weise ein tellerförmiges Element, das um eine zentrale Achse drehbar ist, verwendet wird, können die beide Typen von Säulen equidistant zur zentralen Achse angeordnet werden, wobei sie dann abwechselnd auf dem Element befestigt sind. Bei der Anwendung eines tellerförmigen Elements wird es jedoch besonders bevorzugt, eine getrennte kreisförmige Anordnung beider Typen von Säulen vorzunehmen, wobei sie jeweils eine unterschiedliche Entfernung zur zentralen Achse aufweisen. Bei dieser besonders bevorzugten Ausführungsform sind beide Typen von Säulen jeweils in einer Kreisform auf dem Element angeordnet, wobei die jeweiligen Kreise konzentrisch sind. Auch bei dieser Ausführungsform ist die Anordnung paarweise, wobei jedes Paar nicht unbedingt direkt benachbart sein muß, es aus praktischer Sicht aber üblicherweise sein wird. Was vorstehend bei der Beschreibung der Verbindung mit Zufuhr- und Abfuhrleitungen für die Säulen mit Adsorptionsmittel dargestellt wurde, gilt analog auch für die Säulen mit C-18. Denkbar ist ein System, wobei bei jedem Herstellungsvorgang die Verbindung beider Säulen mit den jeweiligen Zufuhr- und Abfuhrleitungen gleichzeitig hergestellt wird, wodurch die Vorrichtung insgesamt für den Herstellungsvorgang eingerichtet ist. Für die Herstellung der Verbindung der Säulen mit den Zufuhr- und Abfuhrleitungen können unterschiedliche Systeme verwendet werden. Es hat sich als äußerst praktikabel erwiesen, ein pneumatisches System zu benutzen, wobei ein solches System in Prinzip alle Leitungen zum gleichen Zeitpunkt ansteuert, so daß die Verbindung beider Säulen mit jeweils beiden Leitungen gleichzeitig entsteht. Um zu vermeiden, daß geringe Zeitdifferenzen beim Auftreffen der einzelnen Leitungen zu Schwankungen des Elements führt, ist es günstig, einen Organ in der Vorrichtung vorzusehen, welches das Element stabilisiert.

Es sind unterschiedliche Ausführungen des austauschbaren und bewegbaren Elements denkbar. Grundsätzlich kommt praktisch jedes Material in Betracht. Es wurde im Rahmen der ersten Untersuchungen bevorzugt, das Element aus einem Metall herzustellen, wobei insbesondere eine bestimmte Legierung von Aluminium mit Magnesium ($AlMg_3$) günstige Eigenschaften zeigte, da diese Legierung äußerst stabil und relativ leicht und gut bearbeitbar ist. Auch andere Legierungen von Aluminium, Magnesium en Titan kommen in Betracht. Auch andere Metalle wie Stahl oder Messing können benutzt werden, haben jedoch den größeren Gewicht als Nachteil. Auch Kunststoffe wie z.B. PEEK und PVC oder Duroplasten können sicherlich als Grundstoff verwendet werden. Die Befestigung der Säule auf dem Element kann beliebig vorgenommen weiden. Besonders vorteilhaft ist eine Ausführung des Elements aus einem oberen und einem unteren Teil, wobei die Säule zwischen diesen beiden Teilen festgeklemmt wird und im oberen sowie im unteren Teil jeweils eine Aussparung für die Zugangsöffnungen der Säule vorgesehen ist. Bei dieser Ausführungsform des erfindungsgemäßen Elements wird bei horizontaler Anordnung des austauschbaren und bewegbaren Elements jede Säule üblicherweise eine Öffnung auf der oberen Seite des Elements sowie eine zweite Öffnung auf der unteren Seite des Elements zeigen. Beim Eintreffen der Säule in die Arbeitsposition wird die obere Öffnung mit einer Zufuhrleitung verbunden, welche von einer ersten höheren Stellung in eine niedrigere Stellung geführt wird, wobei die Zufuhrleitung in der niedrigeren Stellung die obere Öffnung der Säule umfaßt. Genauso wird eine Abfuhrleitung mit der unteren Öffnung verbunden, wobei die Abfuhrieitung von einer niedrigen Stellung in eine höhere Stellung geführt wird und in der höheren Stellung die untere Öffnung der Säule umfaßt. Es ist offensichtlich, daß im Rahmen der erfindungsgemäßen Vorrichtung Zufuhr- und Abfuhrieitung auch umgekehrt angeordnet sein können. Das austauschbare und bewegbare Element wird Befestigungsmittel aufweisen, um das obere mit dem unteren Teil zu verbinden. Als Befestigungsmittel können beliebige gängige Befestigungsmittel ausgewählt werden. Das Element wird außerdem Befestigungsmittel aufweisen, um fest in der Vorrichtung eingebaut zu werden. Die Befestigungsmittel können wiederum jede beliebige Ausführung haben.

Wichtig ist die genaue Justierung des Elements in der Vorrichtung, damit Anschluß der Zufuhr- und Abfuhrleitungen fehlerfrei abläuft. Dies kann dadurch erzielt werden, daß es mehrere Befestigungsmittel gibt, wie beispielsweise zwei oder drei Schrauben, oder man kann Führungsmittel an Element und Vorrichtung anbringen um eine exakte Position zu sichern.

Die erfindungsgemäße Vorrichtung umfaßt desweiteren einen Behälter zur Aufnahme des gereinigten [$^{15}$O] Butanols. Dieser Behälter wird auf einer solchen Weise in der Vorrichtung integriert sein, daß er am Ende der Herstellung aus der Vorrichtung entnommen werden kann. Der Behälter kann unterschiedlich ausgeführt sein. Bevorzugt wird eine Ausführungsform, wobei die Lösung nach der Reinigung einer Injektionsspritze zugeführt wird. Diese wird sofort zum Gebrauch im nuklearmedizinischen Labor fertig sein. Zum Schutz des Personals muß die Spritze einen Blei- oder Wolframmantel aufweisen.

Ein weiterer Aspekt der vorliegenden Erfindung betrifft das Element zur Aufnahme einer Mehrzahl von ein Adsorptionsmittel enthaltenden Säulen. Wie bereits vorstehend im Rahmen der Beschreibung der erfindungsgemäßen Vorrichtung dargestellt wurde, kann dieses Element in einer beliebigen Form ausgeführt sein. Das Element muß lediglich geeignet sein, eine Mehrzahl von Säulen mit Adsorptionsmittel aufzunehmen, damit es geeignet ist, im Rahmen des erfindungsgemäßen Verfahrens verwendet zu werden. Es wurde jedoch bereits erwähnt, daß eine bevorzugte Ausführungsform für das Element vorsieht, daß dieses in zwei Teilen ausgebildet ist, nämlich einem oberen und einem unteren Teil. Diese zwei Teile werden nach Aufnahme der Säulen zu einem einzigen Element miteinander verbunden, wobei dieses Element dann in die erfindungsgemäße Vorrichtung eingebaut wird. Durch die Kombination der beiden Teile soll eine einwandfrei Befestigung der Säulen erzielt werden.

Eine einwandfreie Befestigung von Säulen läßt sich besonders gut realisieren wenn die Säulen ein zylinderförmiges Format aufweisen, wobei der Zylinder über einem Abschnitt des äußeren Umfangs einen größeren Umfang aufweist. Dies kann zum Beispiel dadurch erreicht werden, daß der Zylinder von einem Ring umfaßt wird, mit dem Ergebnis, daß die Zylinderform zwar insgesamt erhalten bleibt, der Zylinder jedoch in einem bestimmten Bereich einen größeren Durchmesser aufweist. Der größere Umfang der zylinderförmigen Säule macht es in einfacher Weise möglich, die Säule zwischen den beiden Teilen des Elements zu befestigen. In beiden Teilen des Elements werden Aussparungen angebracht, vorzugsweise als runde Bohrungen, welche ein der zylinderförmigen Säule angepaßten Format aufweisen, so daß die Säule jeweils durch den oberen und den unteren Teil hinausragt und für den Anschluß von Zufuhr- und Abfuhrleitungen erreichbar ist. In einem der Teile des Elements oder in beiden Teile wird eine Vergrößerung der Aussparung vorgesehen, wobei diese Vergrößerung so abgemessen wird, daß sie die Säule in seinem größeren Umfang genau umfaßt. Durch diese Ausführung des erfindungsgemäßen Elements ist sichergestellt, daß die Säule fest zwischen beiden aufeinanderliegenden Teilen des Elements befestigt ist. Es wurde im Rahmen der Beschreibung des erfindungsgemäßen Verfahrens bereits dargestellt, daß es bevorzugt wird, Säulen der Firma Waters zu benutzen. Die von dieser Firma vertriebenen Säulen in der Sep-Pak Plus Ausführung besitzen ein Format, wie es gerade als vorteilhaft beschrieben wurde, nämlich ein zylinderförmiges Format mit einem Abschnitt, der einen größeren Umfang aufweist. Die Sep-Pak Plus Säulen der Firma Waters haben sich als besonders geeignet erwiesen, um bei einer bevorzugten Ausführungsform des erfindungsgemäßen Elements verwendet zu werden.

Das Element zur Aufnahme der ein Adsorptionsmittel enthaltenden Säulen kann jedes Format besitzen, besonders bevorzugt ist ein tellerförmiges, also kreisförmiges Format. Nach dieser Ausführungsform besteht das Element aus zwei ebenfalls tellerförmigen Teilen, einem runden unteren Teil und einem runden oberen Teil.

Als äußerst günstig hat sich die Ausführung gezeigt, welche zwei Typen von Säulen aufnimmt, nämlich erstens Säulen mit Aluminiumoxid, wobei die Sep-Pak Alumina N Plus Kartuschen besonders geeignet sind, und zweitens Säulen mit C-18, wobei die Sep-Pak C18 Plus Kartuschen besonders geeignet sind Es hat sich im Hinblick auf einer ökonomischen Benutzung der benutzbaren Fläche des Elements als sehr günstig erwiesen ein tellerförmiges Element zu benutzen, welche Aussparungen für die Säulen aufweist, welche kreisförmig angeordnet sind, wobei für jede der Säulen ein separater Kreis von Aussparungen vorgesehen ist. Die Zahl der Aussparungen im inneren und äußeren Kreis wird dabei gleich gehalten werden. Innerer und äußerer Kreis können relativ zueinander so angeordnet werden, daß der Aussparung im inneren Kreis sich auf dem gleichen Radius befindet wie die entsprechende Aussparung des äußeren Kreises, man kann auch eine andere Anordnung wählen, z.B. eine wobei der Aussparung im äußeren Kreis auf einem Radius liegt, der sich genau zwischen den beiden Radien der angrenzenden Aussparungen im inneren Kreis befindet.

Beschreibung der Erfindung anhand von Ausführungsbeispielen.

Figur 1 stellt eine schematische Abbildung der erfindungsgemäßen Vorrichtung dar.
Figur 2 stellt eine Abbildung des Elements zur Aufnahme der Kartuschen dar.
Figur 3 stellt eine Oberaufsicht des oberen Teils des Elements zur Aufnahme der Kartuschen dar.
Fig. 4 stellt einen Querschnitt des oberen Teils des Elements zur Aufnahme der Kartuschen dar (teilweise).
Figur 5 stellt eine Unteransicht des unteren Teils des Elements zur Aufnahme der Kartuschen dar.
Fig. 6 stellt einen Querschnitt des unteren Teils des Elements zur Aufnahme der Kartuschen dar (teilweise).
Fig. 7 stellt eine Abbildung des Elements zur Aufnahme der Kartuschen dar ( in Querschnitt).

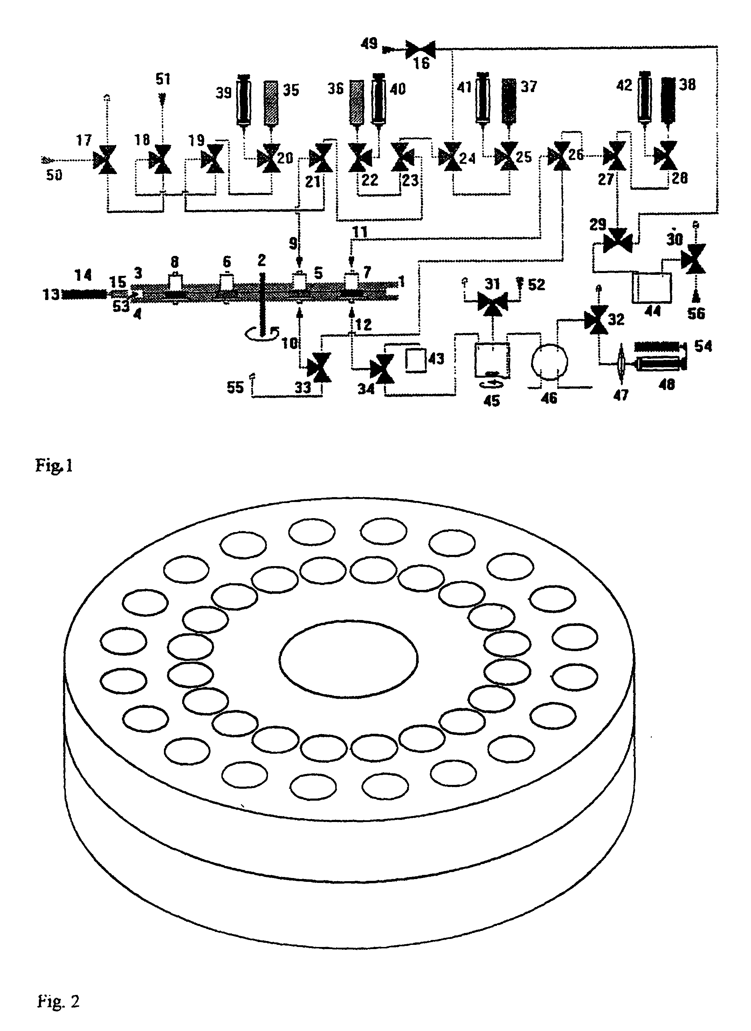

In der Figur 1 ist ein kreisförmiges Element 1 in Querschnitt dargestellt, welches drehbar um eine zentrale Achse 2 aufgestellt ist. Das Element 1 enthält eine Mehrzahl von Säulen, die Abbildung zeigt zwei Säulen 5 und 6 mit Aluminiumoxid (Sep-Pak Alumina Plus Kartusche) und zwei weiteren Säulen 7 und 8 mit C-18 (Sep-Pak C 18 Plus Kartuschen). Das Element 1 setzt sich aus einem oberen Teil 3 und einem unteren Teil 4 zusammen.

Eine Zufuhrleitung 9 führt zur Säule 5, dem Ausgang der Säule 5 ist eine Abfuhrleitung 10 zugeordnet. Eine Zufuhrleitung 11 führt zur Säule 7, dem Ausgang der Säule 7 ist eine Abfuhrleitung 12 zugeordnet. Dem Element 1 ist ein Stabilisierungsorgan 13 zugeordnet, welches sich aus einem pneumatischen Teil 14 und einem ausfahrbaren Teil 15 zusammensetzt. In den Positionen 16 - 34 sind jeweils Ventile dargestellt, von welchen Ventil 16 ein 2 Wegeventil ist und die restlichen Ventile 3 Wegeventile betreffen.

Die Vorrichtung enthält fünf Vorratsgefäße, die Gefäße 35, 36 und 44 enthalten alle Wasser, Gefäß 37 enthält TBB und Gefäß 38 enthält eine 5 %-ige Mischung von Ethanol in Kochsalzlösung. Jedem der Gefäße 35, 36, 37 und 38 ist eine eigene Einspritzvorrichtung zugeordnet, Spritze 39 zu Gefäß 35 mit Wasser, Spritze 40 zu Gefäß 36 mit Wasser, Spritze 41 zu Gefäß 37 und Spritze 42 zu Gefäß 38. Mit 43 und 45 sind Sammelbecken dargestellt. Sammelbecken 45 enthält einen Magnetrührer.

Die Vorrichtung weist eine Analysevorrichtung 46 auf.

Die Vorrichtung weist einen Behälter 48 auf, hier in der Form einer Injektionsspritze. Auf dem Weg zur Injektionsspritze passiert die Lösung einen Sterilfilter 47. Dem Stempel der Injektionsspritze ist eine pneumatische Vorrichtung 54 zugeordnet.

Als Vorbereitung zu der Durchführung des erfindungsgemäßen Verfahrens wurden die Kartuschen mit Aluminiumoxid und C-18 (Sep Pak Alumina Plus und Sep Pak C-18) auf dem Element 1 befestigt. Diese Befestigung wurde außerhalb der Vorrichtung im gleichen Labonaum wo die Herstellung stattfand oder in einem anderen Raum durchgeführt. Der obere Teil 3 wurde abgenommen und die Kartuschen wurden in die dazu vorgesehenen Einsparungen positioniert. Daraufhin wurde der obere Teil 3 angebracht und beide Teile 3 und 4 wurden zusammengeschraubt. Die Kartuschen mit Aluminiumoxid waren nicht vorbehandelt, die Kartuschen mit C-18 waren vorher gespült mit Ethanol.

Das erfindungsgemäße Verfahren wurde durch den Einbau des Elements 1 in die Vorrichtung eingeleitet.

Das Element 1 weist eine Mehrzahl von Säulen mit Adsorptionsmittel auf, von denen in der Figur 1 bei der gewählten Darstellungsweise als Querschnitt lediglich die Säulen 5 und 6 mit Aluminiumoxid und 7 und 8 mit C-18 dargestellt sind.

Nach dem Einbau des Elements in die Vorrichtung wurde das Element gesichert. Dazu wurde das Stabilisierungsorgan 13 aktiviert. Durch Einwirken der pneumatischen Vorrichtung 14 wurde der ausfahrbare Teil 15 bis an das Element 1 geführt. Das Element hat eine Ausgestaltung, daß am seitlichen Rand eine Nut 53 eingearbeitet war. Der ausfahrbare Teil griff in diese Nut ein, mit der Folge, daß eine drehende Bewegung des Elements 1 um die zentrale Achse 2 noch möglich war, ein Kippen des Elements 1 um eine horizontale Achse jedoch nicht mehr.

Anschließend wurden die Zufuhrleitungen 9 und 11 und die Abfuhrleitungen 10 und 12 angebracht. Beim Anbringen des Elements 1 in die Vorrichtung waren die Leitungen in eine Ausgangsposition geführt, um den Einbau ungestört ablaufen zu lassen. Aus dieser Ausgangsposition wurden sie mittels einer pneumatischer Vorrichtung an die Öffnungen der Säulen herangeführt, so daß sie diese umfaßten und so eine hermetisch geschlossene Verbindung hergestellt wurde.

Als erster Schritt im erfindungsgemäßen Verfahren wurde die frische, Aluminiumoxid enthaltende Säule mit Schutzgas gespült. Dazu wurde über die Leitung 48 Argon in das System eingespeist. Über die Ventile 18, 19, und 21 wurde das Gas über die Zufuhrleitung 9 zu der Säule 5 geführt. Der Spülvorgang mit Argon wurde in etwa 30 sek durchgeführt. Als nächster Schritt wurde der Säule durch die Spritze 39 eine geringe Menge Wasser zugeführt, diese Menge betrug 0,2 ml. Die Spritze 39 sog dazu Wasser aus dem Gefäß 35. Aus der Spritze 39 wurde das Wasser über die Ventile 20, 19 und 21 und Zufuhrleitung 9 zu der Säule geführt. Anschließend wurde wiederum über die Leitung 48 und die Ventile 18, 19 und 21 mit Argon gespült. Sofort anschließend wurde der Säule 5 TBB zugeführt und zwar mittels der Spritze 41, welcher das Gefäß 37 als Vorratsgefäß zugeordnet war. Der Zufuhrweg verlief von der Spritze 41 über die Ventile 25, 24, 23 und 21 zu der Zufuhrleitung 9. Anschließend wurde wiederum mit Argon gespült, diesmal durch Zufuhrleitung 49 über die Ventile 16, 24, 23 und 21.

Durch diese Behandlung mit nacheinander Argon, Wasser, wiederum Argon, TBB und nochmals Argon war die Vorbereitung der Säule mit Aluminiumoxid abgeschlossen. Die vollständige Vorbereitung hatte in etwa 2 bis 2,5 min in Anspruch genommen.

Die C-18 Kartusche 7 wurde mit Wasser gespült. Dazu wurde das Wassergefäß 44 über Zufuhrleitung 56 und Ventil 30 mit Argon beaufschlagt. Durch den erzeugten Druck wurde Wasser aus dem Gefäß 44 über die Ventile 29, 27 und 26 und durch die Zufuhrleitung 11 durch die C-18 Kartusche geführt. Das Spülwasser wurde nach diesem Vorgang in dem Sammelbecken 43 aufgefangen und entsorgt.

Die Leitung 50 führte von dem Zyklotron zu der Vorrichtung gemäß der Erfindung. Nach der Vorbereitung der Säule 5 wurde das Ventil 17 geöffnet und wurde der Gasstrom welcher das Radionuklid enthielt über die Ventile 18, 19 und 21 und durch die Zufuhrleitung 9 zu der Säule 5 geführt. Das Ventil 17 wurde 40 sek lang geöffnet. Während der Vorbereitung der Säule 5 und bei dem Durchfuhr der Gasmischung aus dem Zyklotron wurde das Ventil 33 so eingestellt, daß die Behandlungsmittel über die Leitung 55 aus dem System entfernt wurden.

Als nächster Schritt wurde das bei der Reaktion auf der Säule 5 gebildete Reaktionsprodukt hydrolysiert. Dazu wurde 3 ml Wasser mittels der Spritze 40 durch die Säule 5 geführt. Das Wasser wurde über die Ventile 22, 23 und 21 zu der Säule 5 geführt. Am Anfang des Hydrolysevorgangs wurde das Ventil 33 umgestellt, so daß das Wasser über die Abfuhrleitung 10 und die Ventile 33 und 26 und Zufuhrleitung 11 zu der Säule 7 geführt wurde. Die Säule 7 gefüllt mit dem Adsorptionsmittel C18 adsorbierte das Butanol. Die weiteren mehr hydrophilen Hydrolyseprodukte wurden nicht adsorbiert und wurden mit der Wasserphase durch die Säule 7 geführt. Über der Abführleitung 12 und dem Ventil 34 gelangten Wasser und Bor-haltigen Produkte in dem Sammelbecken 43. Soweit in dem Sammelbecken 43 überhaupt Radioaktivität feststellbar war, wurde der Inhalt des Sammelbeckens nach Abklingen dieser Radioaktivität am Ende des Herstellvorgangs entsorgt.

Sofort nach Ende des Wasserdurchfuhrs wurde die Säule 7 eluiert. Dazu wurde 5 ml 5 %-ige Ethanol in 0,9 % iger NaCl-Lösung durch die Säule geführt. Diese Flüssigkeitsmenge wurde durch die Spritze 42 (welcher das Vorratsgefäß 38 zugeordnet war) über die Ventile 28, 27 und 26 zu der Säule 7 geführt. Beim Spülen der Säule mit der ethanolischen Lösung wurde das Butanol von dem Säulemnaterial abgelöst und mit der flüssigen Phase heruntergespült.

Vor Anfang der Elutionsphase wurde das Ventil 34 umgestellt, mit der Folge, daß die Flüssigkeit über die Abfuhrleitung 12 und Ventil 34 zu dem Sammelgefäß 45 geführt wurde. Nachdem die gesamte Menge von 5 ml ethanolischer Lösung injiziert war, wurde die Leitung mit Argon gespült und zwar über die Zufuhrleitung 49 und die Ventile 16, 29, 27 und 26. Ein dem Sammelgefäß 45 zugeordneter Magnetrührer gewährleistete Homogenität der Flüssigkeit. Nach Fertigstellung der Elution wurde die im Sammelbecken 45 gesammelte Flüssigkeit zu der Injektionsspritze 48 geführt. Der Injektionsspritze 48 war eine pneumatische Vorrichtung 49 zugeordnet, welche gewährleistete, daß die Flüssigkeit fehlerfrei in die Spritze aufgezogen wurde. Über die Zufuhrleitung 52 konnte außerdem Argon zugeführt werden, damit das Leeren des Sammelbeckens 45 durch einen gewissen Überdruck erleichtert wird. Da die in der Injektionsspritze 48 aufgezogene Flüssigkeit sofort am Patienten verwendet wurde, war in der Leitung ein Sterilfilter 47 vorgesehen. Als weitere Kontrolle befand sich in der Leitung ein Analysegerät und zwar das HPLC-Gerät 46. Von der hergestellten Charge wurde automatisch eine kleine Probe entnommen und dem HPLC-Gerät zugeführt. Die Analyse der Probe wurde sofort eingeleitet zur Bestätigung, daß die Injektionsspritze praktisch reines Butanol enthielt und die Untersuchung am Patienten ohne Bedenken durchgeführt werden konnte.

Die Injektionsspritze wurde manuell aus der Vorrichtung entnommen und zu dem nuklearmedizinischen Labor transportiert.

Zur Reinigung der Vorrichtung wurden sämtliche Leitungen mit Argon gespült. Diese Reinigungsvorgang dauerte in etwa 2 min. Die Vorrichtung war hierdurch wieder bereit für einen neuen Herstellvorgang.

Die Verbindung der Leitungen 9, 10, 11 und 12 mit den Säulen 5 und 7 wurde verbrochen, das Stabilisierungsmittel 13 wurde aktiviert, mit der Folge, daß die Pneumatik 14 den ausfahrbaren Teil 15 wieder einzog, das tellerförmige Element 1 wurde um seine Achse 2 soviel weiter gedreht, daß die nächsten frischen Säulen die Arbeitsposition eingenommen hatten, wonach der Herstellungsvorgang erneut ablief.

Der gesamte Vorgang wurde vollautomatisch durchgeführt.

Die Darstellung der erfindungsgemäßen Vorrichtung gemäß Abbildung 1 weist insgesamt vier Argonzufuhrleitungen auf, nämlich die Leitungen 49, 51, 52 und 56. Die Darstellung als separate getrennte Leitungen wurde lediglich aus Gründen der Klarheit durchgeführt. In der Praxis weist die Vorrichtung nur eine Argonzufuhrleitung auf, welche die gesamte Vorrichtung mit Argon versorgt.

Die Figur 2 stellt eine perspektivische Darstellung eines Elements zur Aufnahme der Säulen mit Adsorptionsmittel dar. Das Element ist tellerförmig und setzt sich aus einem oberen und einem unteren Teil zusammen. Der äußere Durchmesser des Elements beträgt 25 cm.

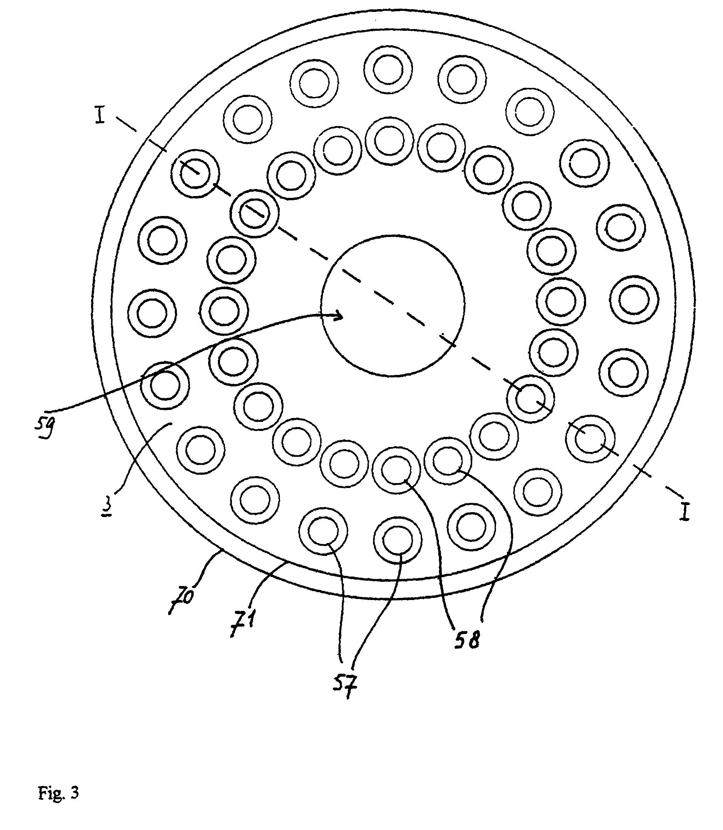

Die Abbildung zeigt zwei Reihen von kreisförmig angeordneten Aussparungen und zwar umfaßt jeder Kreis 20 Aussparungen. Das in der Abbildung dargestellte Element weist eine größere zentrale Aussparung mit einem Durchmesser von 5 cm auf. Die Mittelpunkte der äußeren Aussparungen befinden sich auf einem Kreis mit einem Durchmesser von 10,5 cm. Die Mittelpunkte der inneren Aussparungen befinden sich auf einem Kreis mit einem Durchmesser von 7,5 cm. Nicht dargestellt in der Figur sind die Befestigungsmittel um der obere Teil des Elements mit dem unteren Teil des Elements zu verbinden. Als Befestigungsmittel wurde eine übliche Schraubverbindung gewählt. Ebenfalls nicht dargestellt wurde die Nut im Randbereich des Elements, welche nachfolgend in Zusammenhang mit den Figuren 3,4 und 5 beschrieben wird.

Die Figur 3 stellt den oberen Teil 3 des aus zwei Teilen bestehenden Elements zur Aufnahme der Kartuschen dar. Der obere Teil 3 ist tellerförmig, der Durchmesser im Bereich des äußeren Randes 70 beträgt 25 cm. Der äußere Rand 70 erstreckt sich nicht gleichmäßig über dem gesamten äußeren Bereich des oberen Teils 3, sondern weist einen Bereich 71 mit einem geringeren Durchmesser von 23,6 cm auf, welcher Bereich 71 allerdings bei der Oberaufsicht nicht sichtbar ist. Der obere Teil 3 weist in zwei Kreisen angeordnete Bohrungen 57 und 58 auf. Jede der beiden Kreise weist insgesamt 20 Bohrungen auf. Die Bohrungen 57 und 58 weisen einen gleichen Durchmesser von 12 mm auf. Im mittleren Bereich befindet sich eine zentrale Bohrung 59, deren Durchmesser 5 cm beträgt. Nicht in der Abbildung dargestellt sind Bohrungen zur Aufnahme der Befestigungsmittel zur Befestigung an dem unteren Teil des Elements sowie Befestigungsmittel zur Befestigung des Elements in der Vorrichtung.

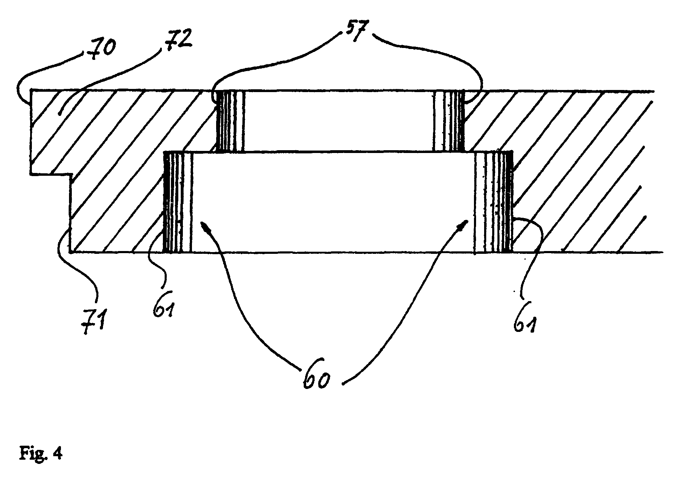

Die Figur 4 stellt den Querschnitt I des in Figur 3 dargestellten oberen Teils 3 des Elements dar. Die Figur zeigt lediglich den äußeren Bereich. Der äußere Rand weist einen Abschnitt 70 und einen Abschnitt 71 auf, der Teil 3 weist im Bereich des unteren Abschnitts 71 einen geringeren Durchmesser auf. Die Bohrung 57 weist einen unteren Bereich 60 mit einem größeren Durchmesser auf, der Durchmesser der Bohrung 57 beträgt 12 mm, des Abschnittes 60 dagegen 17 mm. Der obere Teil 3 ist 8 mm dick, der äußere Rand 72 im Abschnitt 70 ist 3,8 mm dick. Die Höhe 61 des Abschnitts 60 beträgt 5 mm. Die Dimensionen der nicht dargestellten Bohrung 58 stimmen mit denen der Bohrung 57 völlig überein.

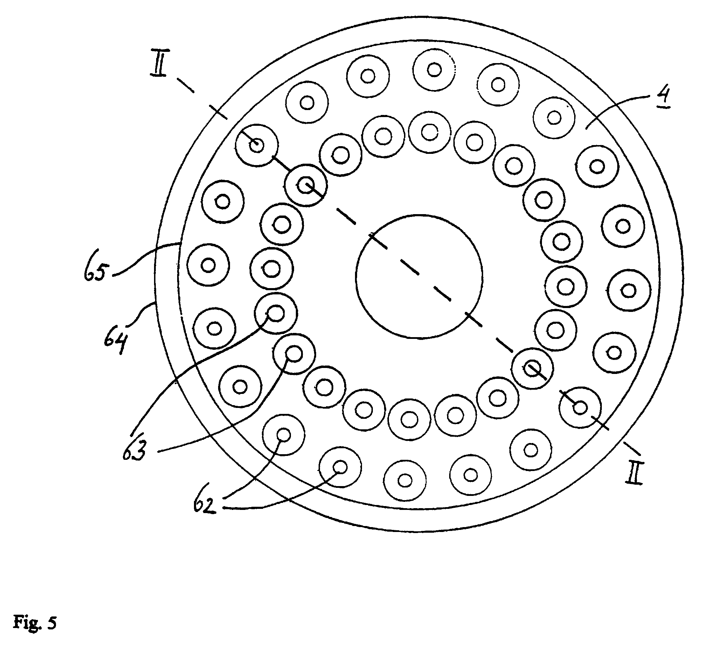

Die Abbildung 5 stellt in Unteransicht den unteren Teil 4 des aus zwei Teilen bestehenden Elements zur Aufnahme der Kartuschen dar. Der untere Teil 4 ist tellerförmig, der Durchmesser im Bereich des äußeren Randes 64 beträgt 25 cm. Der äußere Rand 64 erstreckt sich nicht gleichmäßig über dem gesamten äußeren Bereich des unteren Teils 4, sondern weist einen Bereich 65 mit einem geringeren Durchmesser von 23,6 cm auf, welcher Bereich 65 allerdings bei der Unteransicht nicht sichtbar ist. Der untere Teil 4 weist in zwei Kreisen angeordnete Bohrungen 62 und 63 auf. Jeder der beiden Kreise weist insgesamt 20 identische Bohrungen auf. Die Bohrungen 62 und 63 weisen einen gleichen Durchmesser von 6 mm auf. Im mittleren Bereich befindet sich eine zentrale Bohrung 59, deren Durchmesser 5 cm beträgt. Nicht in der Abbildung dargestellt sind Bohrungen zur Aufnahme der Befestigungsmittel zur Befestigung an dem oberen Teil des Elements sowie Befestigungsmittel zur Befestigung des Elements in der Vorrichtung.

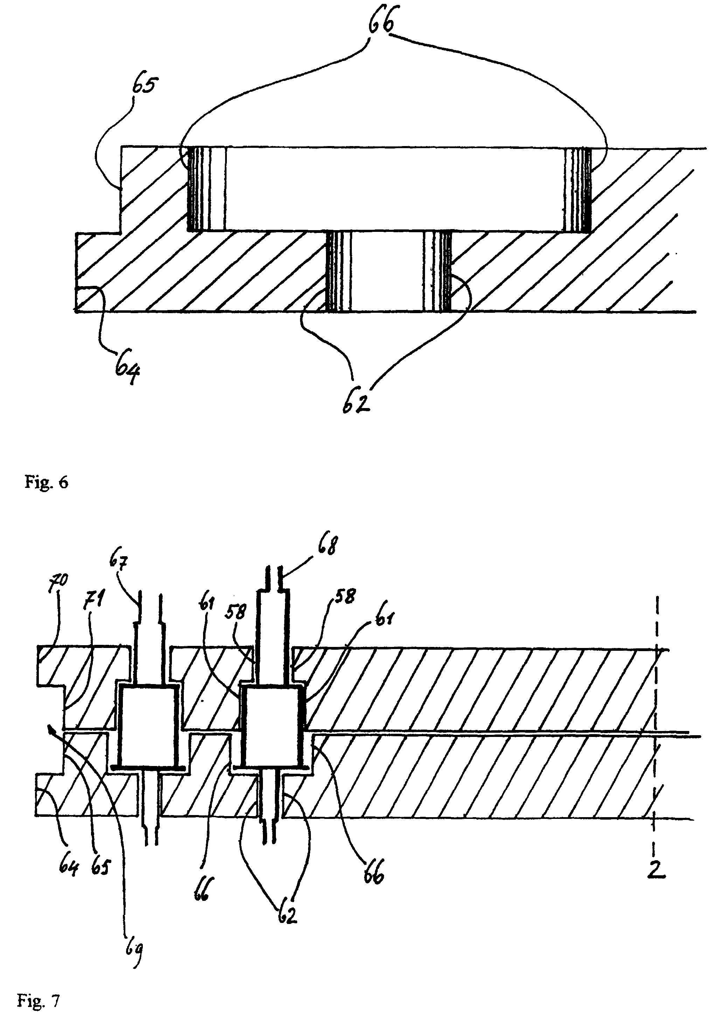

Die Figur 6 stellt den Querschnitt II des in Figur 5 dargestellten unteren Teils 4 des Elements dar. Die Figur zeigt lediglich den äußeren Abschnitt. Der äußere Rand weist eine Abschnitt 64 und einen Abschnitt 65 auf, der obere Abschnitt 65 weist einen geringeren Durchmesser auf. Die Bohrung 62 weist einen höheren Bereich 66 mit einem größeren Durchmesser auf, der Durchmesser der Bohrung 62 beträgt 6 mm, des Abschnittes 66 dagegen 19,5 mm. Der untere Teil 4 ist 8 mm dick, der äußere Rand im Abschnitt 64 ist 3,8 mm dick. Die Höhe des Abschnitts 66 beträgt 4 mm. Die Dimensionen der nicht dargestellten Bohrung 63 stimmen mit denen der Bohrung 62 völlig überein.

Die Figur 7 stellt im Querschnitt das Element dar. Die Abbildung verdeutlicht, wie die Kartuschen 67 und 68 von den beiden Teilen 3 und 4 des Elements aufgenommen werden und wie ihre Befestigung durch das Zusammenwirken der beiden Teile 3 und 4 erfolgt. Im Bereich 69 ist eine Nut entstanden, welche zur Stabilisierung des Elements in der Vorrichtung genutzt wird.

**Patentansprüche**

1. Verfahren zur Herstellung von [$^{15}$O]Butanol wobei eine ein Adsorptionsmittel enthaltende Säule mit Tri-n-Butylboran beaufschlagt wird, durch die Säule ein [$^{15}$O]O$_2$ enthaltendes Gas geführt wird, das Reaktionsprodukt hydrolysiert wird, das hierbei entstandene [$^{15}$O]Butanol gereinigt wird und die das gereinigte [$^{15}$O]Butanol enthaltende Lösung einem Behälter zugeführt wird, **dadurch gekennzeichnet, daß** eine Mehrzahl von das Adsorptionsmittel enthaltenden Säulen auf einem austauschbaren Element befestigt wird und die Beaufschlagung mit Tri-n-Butylboran an auf dem Element befestigten Säulen durchgeführt wird.

2. Verfahren nach Anspruch 1, **dadurch gekennzeichnet, daß** als Adsorptionsmittel Aluminiumoxid (Al$_2$O$_3$) verwendet wird.

3. Verfahren nach einem der Ansprüche 1 oder 2, **dadurch gekennzeichnet, daß** die Reinigung des [$^{15}$O]Butanols auf einer mit einem weiteren Adsorptionsmittel gefüllten Säule vorgenommen wird.

4. Verfahren nach Anspruch 3, **dadurch gekennzeichnet, daß** als weiteres Adsorptionsmittel C-18 verwendet wird.

5. Verfahren nach Anspruch 3 oder 4, **dadurch gekennzeichnet, daß** die Säule mit dem weiteren Adsorptionsmittel auf einem zweiten austauschbaren Element befestigt sind.

6. Verfahren nach Anspruch 5, **dadurch gekennzeichnet, daß** als zweites austauschbares Element das austauschbare Element gemäß Anspruch 1 verwendet wird.

7. Vorrichtung zur Durchführung des Verfahrens nach einem der vorangehenden Ansprüche, wobei die Vorrichtung einen Schutzgaszufuhr, einen Behälter mit Wasser, ein Element zur Aufnahme von einer Mehrzahl ein Adsorptionsmittel enthaltender Säulen, eine Anordnung zur Reinigung des entstandenen [$^{15}$O]Butanol und einen Behälter zur Aufnahme des gereinigten [$^{15}$O]Butanols umfaßt, **dadurch gekennzeichnet, daß** die Vorrichtung einen Behälter mit Tri-n-Butylboran umfaßt und das Element zur Aufnahme von ein Adsorptionsmittel enthaltenden Säulen austauschbar ist und bewegbar angeordnet ist.

8. Vorrrichtung nach Anspruch 7, **dadurch, gekennzeichnet, daß** das Adsorptiosmittel Aluminiumoxid ist.

9. Vorrichtung nach Anspruch 7 oder 8, **dadurch, gekennzeichnet, daß** das Element zur Aufnahme von ein Adsorptionsmittel enthaltenden Säulen tellerförmig ist und um seine zentrale Achse drehbar angeordnet ist.

10. Vorrichtung nach Anspruch 7, 8 oder 9, **dadurch, gekennzeichnet, daß** das Element 15 bis 25 ein Adsorptionsmittel enthaltende Säulen enthält.

11. Vorrichtung nach einem der Ansprüche 7 bis 10, **dadurch, gekennzeichnet, daß** jedem der Behälter eine Spritze zugeordnet ist, welche aus dem jeweiligen Behälter gefüllt wird.

12. Vorrichtung nach einem der Ansprüche 7 bis 11, **dadurch, gekennzeichnet, daß** die Vorrichtung Säulen mit C-18 zur Reinigung des entstandenen [$^{15}$O]Butanols enthält.

13. Vorrichtung nach Anspruch 12, **dadurch, gekennzeichnet, daß** die Säulen mit C-18 auf dem Element gemäß Anspruch 7 befestigt sind.

14. Vorrichtung nach Anspruch 13, **dadurch, gekennzeichnet, daß** das Element die gleiche Zahl Säulen mit C-18 als Säulen mit Adsorptionsmittel, insbesondere Säulen mit Alumiumoxid, enthält.

15. Vorrichtung nach einem der Ansprüche 7 bis 14, **dadurch gekennzeichnet, daß** der Behälter zur Aufnahme des

gereinigten [$^{15}$O]Butanols eine Injektionsspritze ist.

16. Vorrichtung nach Anspruch 15, **dadurch gekennzeichnet, daß** die Injektionsspritze einen Wolframmantel aufweist.

17. Tellerförmiges Element zur Aufnahme einer Mehrzahl von mit Adsorptionsmittel gefüllten Säulen wo die Reaktion von Tri-n-Butylboran mit dem Radionuclid [$^{15}$O]O$_2$ stattfindet, welche über einem bestimmten Bereich des zylinderförmigen Außenmantels einen erhöhten Umfang aufweisen, wobei das Element sich aus einem oberen und einem unteren Teil zusammensetzt und der obere und untere Teil einen Raum im Innern freilassen, deren Wände die Säulen im Bereich mit dem erhöhten Umfang umfassen.

**Claims**

1. A process for preparing [$^{15}$O]butanol, wherein a column containing an adsorbent is treated with tri-n-butylborane, a gas containing [$^{15}$O]O$_2$ is passed through the column, the reaction product is hydrolysed, the [$^{15}$O]butanol obtained in this way is purified and the solution containing the purified [$^{15}$O]butanol is supplied to a container, **characterised in that** several columns containing adsorbent are fastened to an exchangeable unit and the columns are subjected to tri-n-butylborane while fastened to the unit

2. A process according to Claim 1, **characterised in that** aluminium oxide (Al$_2$O$_3$) is used as an adsorbent

3. A process according to one of Claims 1 or 2, **characterised in that** purification of the [$^{15}$O]butanol is performed on a column filled with a further adsorbent.

4. A process according to Claim 3, **characterised in that** C-18 is used as the further adsorbent

5. A process according to Claim 3 or 4, **characterised in that** the column with the further adsorbent is fastened to a second exchangeable unit.

6. A process according to Claim 5, **characterised in that** the exchangeable unit in accordance with Claim 1 is used as the second exchangeable unit.

7. A device for performing the process according to one of the preceding Claims, wherein the device includes a protective gas supply, a container with water, a unit for taking a number of columns containing an adsorbent, an arrangement for purifying the [$^{15}$O]butanol being produced and a container for taking the purified [$^{15}$O]butanol, **characterised in that** the device includes a container with tri-n-butylborane and that the unit for taking a column containing an adsorbent is arranged in an exchangeable and movable fashion.

8. A device according to Claim 7, **characterised in that** the adsorbent is aluminium oxide.

9. A device according to Claim 7 or 8, **characterised in that** the unit for taking a column containing an adsorbent is plate-shaped and is arranged to be rotatable about its central axis.

10. A device according to Claim 7, 8 or 9, **characterised in that** the unit contains 15 to 25 columns containing an adsorbent.

11. A device according to one of Claims 7 to 10, **characterised in that** a syringe is assigned to each container and this is filled from the relevant container.

12. A device according to one of Claims 7 to 11, **characterised in that** the device contains columns with C-18 for purifying the [$^{15}$O]butanol being produced.

13. A device according to Claim 12, **characterised** is that the columns with C-18 are fastened to the unit according to Claim 7.

14. A device according to Claim 13, **characterised in that** the unit contains the same number of columns with C-18 as columns with adsorbent, in particular columns with aluminium oxide.

**15.** A device according to one of Claims 7 to 14, **characterised in that** the container for taking purified [$^{15}$O]butanol is an injection syringe.

**16.** A device according to Claim 15, **characterised in that** the injection syringe has a tungsten jacket.

**17.** A plate-shaped unit for taking a number of columns filled with adsorbent, where the reaction of tri-n-butylborane with the radionucleide [$^{15}$O]O$_2$ takes place, which has an increased circumference over a specific region of the cylindrical external jacket, wherein the unit is composed of an upper and a lower part and the upper and lower parts expose a space in the interior, the walls of which surround the columns in the region with increased circumference.

**Revendications**

**1.** Procédé de préparation du [$^{15}$O]butanol, dans lequel une colonne contenant un adsorbant est alimentée en tri-n-butylborane, un gaz contenant du [$^{15}$O]O$_2$ circule à travers cette colonne, le produit de la réaction est hydrolysé, le [$^{15}$O]butanol produit à cette occasion est épuré et un récipient est alimenté avec la solution contenant le [$^{15}$O]butanol épuré, **caractérisé en ce qu'**une pluralité de colonnes contenant de l'adsorbant est fixée sur un élément interchangeable, et que l'alimentation en tri-n-butylborane est effectuée au niveau des colonnes fixées à cet élément.

**2.** Procédé selon la revendication 1, **caractérisé en ce que** de l'oxyde d'aluminium (Al$_2$O$_3$) est utilisé comme adsorbant.

**3.** Procédé selon l'une des revendications 1 ou 2, **caractérisé en ce que** l'épuration du [$^{15}$O]butanol est effectuée sur une colonne remplie avec un autre adsorbant.

**4.** Procédé selon la revendication 3, **caractérisé en ce que** du C-18 est utilisé comme autre adsorbant.

**5.** Procédé selon la revendication 3 ou 4, **caractérisé en ce que** la colonne contenant l'autre adsorbant est fixée sur un second élément interchangeable.

**6.** Procédé selon la revendication 5, **caractérisé en ce que** l'élément interchangeable selon la revendication 1 est utilisé comme second élément interchangeable.

**7.** Dispositif pour la mise en oeuvre du procédé selon l'une des revendications précédentes le dispositif comprenant un apport en gaz protecteur, un récipient avec de l'eau, un élément permettant de recevoir une pluralité de colonnes contenant un adsorbant, un agencement destiné à l'épuration du [$^{15}$O]butanol produit et un récipient destiné à recueillir le [$^{15}$O]butanol épuré, **caractérisé en ce que** le dispositif comprend un récipient contenant du tri-n-butylborane et que l'élément destiné à recevoir les colonnes contenant un adsorbant est interchangeable et est agencé de façon mobile.

**8.** Dispositif selon la revendication 7, **caractérisé en ce que** l'adsorbant est de l'oxyde d'aluminium.

**9.** Dispositif selon la revendication 7 ou 8, **caractérisé en ce que** l'élément destiné à recevoir les colonnes contenant l'adsorbant a une forme d'assiette et est agencé de façon à pouvoir tourner autour de son axe central.

**10.** Dispositif selon la revendication 7, 8 ou 9, **caractérisé en ce que** l'élément contient 15 à 25 colonnes contenant un adsorbant.

**11.** Dispositif selon l'une des revendications 7 à 10, **caractérisé en ce qu'**une seringue est reliée à chacun des récipients, laquelle seringue est remplie à partir du récipient correspondant.

**12.** Dispositif selon l'une des revendications 7 à 11, **caractérisé en ce que** le dispositif contient des colonnes avec du C-18 destinées à épurer le [$^{15}$O]butanol produit.

**13.** Dispositif selon la revendication 12, **caractérisé en ce que** les colonnes avec le C-18 sont fixées sur l'élément selon la revendication 7.

**14.** Dispositif selon la revendication 13, **caractérisé en ce que** l'élément contient le même nombre de colonnes contenant du C-18 que de colonnes contenant de l'adsorbant, en particulier de colonnes contenant de l'oxyde d'aluminium.

**15.** Dispositif selon l'une queiconque des revendications 7 à 14, **caractérisé en ce que** le récipient destiné à recueillir le [$^{15}$O]butanol rincé est une seringue à injection.

**16.** Dispositif selon la revendication 15, **caractérisé en ce que** la seringue à injection présente une enveloppe en tungstène (wolfram).

**17.** Elément en forme d'assiette destiné à recevoir une pluralité de colonnes remplies d'adsorbant, au sein desquelles la réaction du tri-n-butylborane avec le radionucléide [$^{15}$O]O$_2$ a lieu, lesquelles présentent un diamètre plus important dans une zone définie de l'enveloppe extérieure en forme de cylindre, lequel élément se compose d'une partie supérieure et d'une partie inférieure et la partie supérieure et la partie inférieure délimitent un espace à l'intérieur dont les parois entourent les colonnes dans la zone dotée d'un diamètre plus important.

EP 1 062 190 B1

Fig. 1

Fig. 2

Fig. 3

Fig. 4

Fig. 5

66

65

62

64

Fig. 6

70 71 67 68 61 58 58 61

64 65 66 66

66 62

69

2

Fig. 7